# EUROPEAN PATENT APPLICATION

(11) **EP 4 672 645 A1**
(43) Date of publication of application: **31.12.2025**
(21) Application number: 24185081.7
(22) Date of filing: 27.06.2024
(51) Int. Cl.: H04J 14/02, H04Q 11/00

(54) **COMMUNICATION NETWORK AND OPTICAL TRANSCEIVER**

(71) Applicant: Adtran Networks SE, 98617 Meiningen (DE)
(72) Inventor: Bleck, Oliver, 82538 Geretsried (DE); Hinderthür, Henning, 86923 Finning (DE); Eiselt, Michael, 99334 Kirchheim (DE)
(74) Representative: Eder Schieschke & Partner mbB

(57) **Abstract**

The invention relates to a communication network comprising an Internet protocol (IP) network and an optical network, wherein the IP network defines an IP domain and comprises a plurality of IP network elements, wherein the optical network defines an optical domain and comprises a plurality of optical network elements and an optical network management system, which takes over control functions in the optical domain, and wherein at least one IP network element comprises at least one optical transceiver which is connected, via an optical path, to a dedicated optical network element. In an in-service mode, the optical transceiver, is configured to convert downstream optical traffic included in a bidirectional optical service channel, which is received from the dedicated optical network element and destined for the IP domain, into IP traffic that is further processed by the at least one IP network element and to convert IP traffic, which is received from the at least one IP network element and destined for the optical domain, into upstream optical traffic included in the bidirectional optical service channel that is fed to and further processed by the dedicated optical network element. According to the invention, the at least one optical transceiver is configured to be switchable between an authentication mode and the in-service mode and to communicate with the optical network management system using a transceiver management channel. The at least one optical transceiver and the optical network are configured to establish the transceiver management channel, in the authentication mode, at least between the at least one optical transceiver and the dedicated optical network by using a dedicated management wavelength out of band with respect to service wavelengths reserved for all optical service channels in the optical network. Further, the invention relates to an optical transceiver which is configured to realize such a communication network.

## Description

The invention relates to a communication network comprising an Internet protocol (IP) network and an optical network, wherein the IP network defines an IP domain and comprises a plurality of IP network elements and an IP network management system, which takes over control functions in the IP domain, and wherein the optical network defines an optical domain and comprises a plurality of optical network elements and an optical network management system, which takes over control functions in the optical domain.

It shall be noted that in the following the IP domain and the optical domain are regarded as separate domains even if IP traffic is embedded into the payload of optical signals that are transmitted within the optical domain.

In such communication networks, the optical network is often dedicated to long-thaul traffic. Typically, the optical network interfaces the IP network at a plurality of points, wherein routers that are comprised by the IP network are used in order to convert downstream optical traffic received from the optical network into IP traffic and to convert IP traffic received from the IP network into optical traffic.

The optical network is usually a WDM (Wavelength Division Multiplexing) optical network. Usually, a transponder has been used as an interface in the optical domain. A bidirectional communication functionality has been implemented between the optical management system and the transponder in order to realize configuration, accounting, performance and security (FCAPS) management functions in the optical network. That is, the transponder has functioned as demarcation point between the optical network and the IP network so that it was possible to fully administrate the optical network on the optical side. Especially, it has been possible in such optical networks to configure a transponder comprising a tunable laser with respect to its center wavelength in order to realize a colorless optical network. Further, the use of transponders with integrated forward error correction (FEC) has made it possible to collect and use information on bit error rates (BER) by the optical management system.

Thus, the use of transponders makes it possible to effectively manage the IP domain and the optical domain and maintain the IP network and the optical network using separate administration staffs.

In such communication networks, the router in the IP domain usually comprises a fixed wavelength transceiver that is coupled, via an optical fiber, to the transponder. Thus, in order to reduce the number of hardware components, a logical step was to replace the fixed wavelength transceiver by a tunable transceiver having all the functionality of the transponder. The term "fixed wavelength transceiver" comprises all kind of transceivers that do not support exact definition of the transmit wavelength required for dense WDM transmission. Furthermore, wavelength stability is not a requirement, such that this kind of transceiver also comprises the so called "grey interfaces" emitted light at an arbitrary wavelength within a predefined wavelength range.

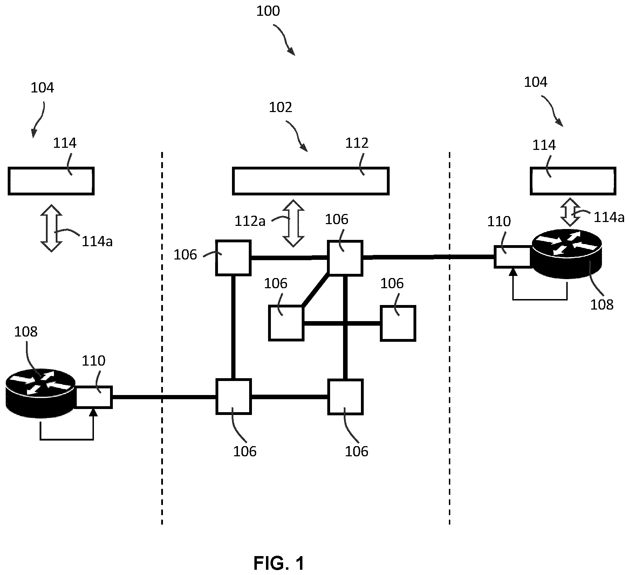

FIG. 1 schematically shows the architecture of such a communication network 100 comprising an optical network 102 and an IP network 104. The optical network 102 comprises a plurality of network nodes or optical network elements 106 connected to each other as apparent from the Figure. Of course, the optical network elements 106 may be connected to each other in any appropriate manner. For example, a fully meshed architecture may be chosen for the optical network 104. The optical network elements 106 may, for example, be realized as reconfigurable optical add-drop multiplexers (ROADMs). The IP network 104 is represented by two IP network elements 108, namely, routers, only, which connect the IP network 104 to the optical network 102 by means of a respective optical transceiver 110 comprised by the routers. Of course, the IP network 104 may comprise arbitrary further IP network elements. As already mentioned above, the optical transceivers 110 usually (but not necessarily) are tunable optical transceivers in order to realize a colorless optical network 102.

This type of network architecture is generally referred to as IP over optical network or IP over WDM (IPoWDM) network in case the optical network is a WDM optical network.

As apparent from FIG. 1, the IP network 104 comprises an IP network management system 114 configured to manage all functionalities of the IP network 104 including routers and the optical transceivers 110 comprised by the routers 108 (this management functionality is indicated by arrows 114a). Likewise, the optical network 102 comprises an optical network management system 112 that is configured to manage the functionality of the optical network as described above (including all FCAPS functionality; this management functionality is indicated by arrow 112a). However, as the routers 108 in the IP domain comprise the optical transceivers 110, the optical network management 112 has no access to the optical transceivers 110. Thus, this shift of the optical transceivers 110 into the IP domain and managing the functionality of the optical transceivers 110 via the IP network management system results in the disadvantage that administration staff responsible for the optical network 102 does not have access to the optical transceivers 110 and respective functionalities thereof that are important to the optical domain. This is critical even if a single service provider is responsible for both networks as different administration staffs are competent for the two networks.

As an instructive example, the optical network management system 112 is unable to configure the optical transceivers 110 with respect to their center wavelength (i.e. the WDM channel within the optical network 102) or with respect to the modulation format used for the communication within the optical network 102.

EP 2 039 036 B1 deals with this set of problems and discloses a method for managing optical and IP network devices in a network architecture where optical management functions reside on an IP network device, wherein a protocol layer is used between the router comprising the optical transceiver and the optical network element that connects the optical transceiver to the optical network. According to a specific embodiment, the protocol layer is an extension of the existing Link Management Protocol (LMP), which is preferably based on the LMP-WDM IETF standard. According to another embodiment, an out of band signaling interface may be provided between the router and the optical network element connected thereto. This out of band signaling interface may be a dedicated ethernet connection between the router and the respective optical network element.

The disadvantage of this solution, however, is that the border separating the management of the IP network and the optical network is blurred as an additional protocol layer is used between the router comprising the optical transceiver and the respective optical network element connected thereto, or an out of band signaling interface using a dedicated Ethernet connection is required between the router and the optical network element, i.e. a communication connection between the router and the optical network element is required.

It is therefore an object of the present invention to provide an IP over optical network which allows for a simple management of the optical transceivers comprised by routers in the IP domain, especially (re-) configuring the transceivers, by the optical network management system without the necessity of a communication link between the routers and the respective optical network elements connected thereto or the optical management system. It is a further object of the present invention to provide an optical transceiver for such an IP over optical network.

The invention achieves these objects according to the combination of features of claims 1 and 14, respectively. Further embodiments of the invention are apparent from the dependent claims.

The invention starts from the finding that the use of intelligent optical transceivers that are configured to operate in an authentication mode and in an in-service mode can avoid the necessity of a communication link existing between the router (or more generally spoken, the IP network element) that comprises such an intelligent optical transceiver and the optical network management system in order to enable the optical network management system to manage the intelligent optical transceiver. As a result, no communication connection between the optical network management system and the router in the IP domain is required. At least in this respect, a strict delimitation between the management of the IP and optical domains can be maintained.

The invention relates to a communication network comprising an Internet protocol (IP) network and an optical network, wherein the IP network defines an IP domain and comprises a plurality of IP network elements, and wherein the optical network defines an optical domain and comprises a plurality of optical network elements and an optical network management system, which takes over control functions in the optical domain. At least one IP network element comprises at least one optical transceiver which is connected, via an optical path, to a dedicated optical network element and which, in an in-service mode, is configured
to convert downstream optical traffic included in a bidirectional optical service channel, which is received from the dedicated optical network element and destined for the IP domain, into IP traffic that is further processed by the at least one IP network element and
to convert IP traffic, which is received from the at least one IP network element and destined for the optical domain, into upstream optical traffic included in the bidirectional optical service channel that is fed to and further processed by the dedicated optical network element.

According to the invention, the at least one optical transceiver is configured to be switchable between an authentication mode and the in-service mode, and the at least one optical transceiver is configured to communicate with the optical network management system using a transceiver management channel, wherein the at least one optical transceiver and the optical network are configured to establish the transceiver management channel, in the authentication mode, at least between the at least one optical transceiver and the dedicated optical network by using a dedicated management wavelength out of band with respect to service wavelengths reserved for all optical service channels in the optical network or at least out of band with respect to service wavelengths reserved for the respective optical transceiver (see also the below explanations of embodiments using transceiver-access point controllers).

Using such a transceiver management channel, the optical management system is able to communicate with the intelligent optical transceivers in the IP domain using layer 1 or 2 of the ISO/OSI reference model. Especially, this makes it possible to configure the optical transceiver with respect to all parameters that are important to the optical domain, even if an optical transceiver is not yet integrated in the optical communication in the optical domain. The dedicated out of band wavelength used in the authentication mode of an optical transceiver makes it possible to configure and thus integrate a non-configured optical transceiver into the optical network and the optical domain, respectively.

According to an embodiment of the invention, the at least one optical transceiver and the optical network are configured to establish the transceiver management channel, in the in-service mode, at least between the at least one optical transceiver and the dedicated optical network element by using an embedded management channel. Appropriate methods to realize such an embedded management channel, also referred to as embedded communication channel (ECC), are well known in the art. For example, the intelligent optical transceiver may be configured to create a data signal comprising the information of the respective IP traffic destined for the optical domain in such a way that a low frequency amplitude modulation of the data signal is used to establish the embedded management channel.

According to a further embodiment of the invention, the at least one optical transceiver is configured to automatically switch into the authentication mode after power and/or to switch from the in-service mode to the authentication mode after having received a reconfiguration command from the optical network management system (that is, the transceiver management channel that is established in the in-service mode can also be used to switch an optical transceiver into the authentication mode).

In a further embodiment, the optical management system comprises, integrally or as a separate device, a transceiver controller which is configured to bidirectionally communicate with the at least one optical transceiver, and optionally with the optical network management system, using the transceiver management channel. The transceiver controller takes over all tasks and functionality that require communication with the optical transceivers in the IP domain including the configuration of the optical transceivers (especially, but not restricted to transmitting of relevant configuration parameters, for example the wavelength to be used during the in-service mode, to the optical transceiver) and obtaining information from the optical transceivers that is required for management purposes in the optical domain (for example, the bit error rate that is determined on the electrical side of the intelligent optical transceiver).

In general, such an intelligent optical transceiver is tunable with respect to the center wavelength of the (wanted) data signal that is created in the in-service mode. The wavelength tunability is usually achieved by providing a tunable laser within the optical transceiver.

According to an alternative, the optical network of the communication network may be configured in such a way that the transceiver management channel is realized in the upstream direction to the transceiver controller, in the authentication mode, also between the dedicated optical network element and the transceiver controller, by using the dedicated management wavelength, wherein the optical network is configured in such a way that all upstream optical management signals at the dedicated management wavelength that are created by the optical transceivers operating in the authentication mode and received at respective optical network elements are received by the transceiver controller. However, this requires that the transceiver controller is positioned in such a way within the optical network that it has access to all signals created by the, as the case may be, plurality of optical transceivers operating in the authentication mode or that the optical network is configured in an appropriate way with respect to the optical paths provided therein.

In this alternative, a management signal that is created by an intelligent optical transceiver connected to a dedicated optical network element is guided by an optical path until it reaches the transceiver controller.

The optical paths used for these upstream optical management signals may at least partly overlap (at least the last part of the optical path connecting the transceiver controller, i.e. the receiver thereof). Thus, the at least one optical transceiver may be configured to use a Time Division Multiple Access (TDMA) scheme for the communication in the upstream direction in the authentication mode.

The TDMA scheme may be realized as an asymmetric TDMA scheme in order to avoid continuous collision with other transceiver management channels used by other optical transceivers, wherein a transmission in the upstream direction is repeated either in non-constant, especially randomized intervals or in constant intervals that are determined using a unique characteristic feature of the at least one optical transceiver, for example a serial number thereof.

According to a further embodiment of the invention, the optical network may be configured in such a way that the transceiver management channel is realized in the downstream direction to the at least one optical transceiver, in the authentication mode, also between the transceiver controller and the dedicated optical network element, by using the dedicated management wavelength.

In such embodiments, the optical network and the transceiver controller may be configured in such a way that a downstream optical management signal at the dedicated management wavelength is broadcasted to all optical network elements that are capable of being connected to at least one optical transceiver.

The intelligent optical transceivers may be configured to include an identification information, for example the serial number or the media access control (MAC) address of the respective transceiver, in an upstream optical management signal. This information can be used by the transceiver controller to address the optical transceiver when transmitting a downstream optical management signal (in the respective optical management channel) to the respective optical transceiver. The address information can, of course, be included in the downstream management signal in order to be evaluated by the optical transceivers. Only the optical transceiver addressed will then carry out actions according to the information included in the downstream management signal, for example adjusting its wavelength to a desired in-service wavelength or adjusting the modulation format to a desired modulation format.

According to an embodiment of the invention, the transceiver controller comprises at least one transceiver access-point controller (TAPC) located at or integrated within the at least one optical network element, wherein the optical network (especially the optical network management system) is configured in such a way that, in the authentication mode, the transceiver management channel in the downstream direction to the at least one optical transceiver between the transceiver controller and the at least one TAPC is realized by using a management communication functionality of the optical network management system, wherein the least one TAPC is configured to realize the transceiver management channel in the downstream direction to the at least one optical transceiver by receiving information from the optical network management system (and/or the transceiver controller, which is included therein) via the management communication functionality and creating a respective downstream optical management signal at the dedicated management wavelength including the information that is received by the respective intelligent optical transceiver.

In other words, in such an embodiment, the TAPC terminates the transceiver management channel using the dedicated management wavelength in the downstream direction in the respective optical network element that connects the intelligent optical transceiver. The transceiver management channel between the transceiver controller and the respective optical network element is realized by means of the existing management communication functionality in the optical domain.

According to a further embodiment of the invention, the transceiver controller comprises at least one transceiver access-point controller (TAPC) located at or integrated within the at least one optical network element, which is configured to connect at least one intelligent optical transceiver. In such embodiments, the optical network may be configured in such a way that, in the authentication mode, the transceiver management channel in the upstream direction to the transceiver controller between the at least one transceiver access-point controller and the transceiver controller is realized by using a management communication functionality of the optical network management system, wherein the least one TAPC is configured to receive a respective upstream optical management signal at the dedicated management wavelength from the at least one optical transceiver, to extract information included in the upstream optical management signal received and to transmit this information to the optical network management system (or the transceiver controller comprised by the optical network management system) using the existing management communication functionality thereof.

In such embodiments, the TAPC terminates the transceiver management channel using the dedicated management wavelength in the upstream direction in the respective optical network element that connects the intelligent optical transceiver. The transceiver management channel between the respective optical network element and the transceiver controller is realized by means of the existing management communication functionality in the optical domain.

The existing management functionality of the optical network management system (in the upstream and/or downstream direction) may be realized in any manner known in the art, including a separate communication network or embedded communication channels that are included in in-service signals transmitted within the optical network. For this reason, this management functionality is not described in more detail here.

In embodiments in which the TAPC terminates the transceiver management channel in the downstream direction and a permanent optical path is provided between the dedicated optical network element and the transceiver controller (i.e. the dedicated management wavelength is used in order to realize the transceiver management channel in the upstream direction for the whole path between the optical transceiver and the transceiver controller), the optical network management system (that comprises the transceiver controller) must be configured to determine which optical network element the respective intelligent optical transceiver is connected to. The optical network management system and/or the transceiver controller may, for this purpose, be adapted to configure the optical network (especially reconfigurable optical add/drop multiplexers (ROADMs) comprised within network nodes) in such a way that only a single optical network element that is capable of connecting such intelligent optical transceivers is optically connected to the transceiver controller. The respective optical network elements could be connected to the transceiver controller (via a selected optical path) for a predetermined maximum time interval only, wherein the time interval is selected to be at least long enough for an upstream management signal to have been received within the time interval. For example, the intelligent optical transceivers may be configured to repeat an upstream optical management signal in case no answer is received from the transceiver controller at the latest after a predetermined maximum time interval (as mentioned above, the intelligent optical transceivers may repeat an optical upstream management signal at time intervals shorter than the predetermined maximum time interval). In case the transceiver controller detects no optical upstream management signal within this maximum time interval, it is clear that the respective intelligent optical transceiver is not connected to the optical network element that is connected to the transceiver controller during the respective time interval, and, in case a signal is detected, the correct optical network element has been identified.

According to another embodiment, the transceiver controller comprises at least one transceiver access-point controller (TAPC) located at or integrated within the at least one optical network element, wherein the TAPC is configured to terminate the transceiver management channel using the dedicated management wavelength in both directions (in the upstream and downstream direction) in the respective optical network element.

In such embodiments, the optical network is configured in such a way that, in the authentication mode, the transceiver management channel in the upstream direction to the transceiver controller between the at least one transceiver access-point controller and the transceiver controller is realized by using the management communication functionality of the optical network management system, wherein the least one TAPC is configured to realize the transceiver management channel in the downstream direction to the at least one optical transceiver by creating a respective downstream optical management signal at the dedicated management wavelength. Further, in such embodiments, the optical network is configured in such a way that, in the authentication mode, the transceiver management channel in the upstream direction to the transceiver controller between the at least one TAPC and the transceiver controller is realized by using a management communication functionality of the optical network management system, wherein the least one TAPC is configured to receive a respective upstream optical management signal at the dedicated management wavelength from the at least one optical transceiver. In either direction, the TAPC is configured to realize the functionality as explained above.

It shall be noted that the dedicated (out of band) management wavelength must be chosen in such a way that, depending on the embodiment of the invention, no interference is effected or may be effected with the service wavelengths of optical service channels that are actually used in the optical network or that are reserved for the optical network. In embodiments in which the dedicated management wavelength is transmitted (via optical paths; in the upstream and/or downstream direction) within the optical network (i.e. beyond a network node the respective optical transceiver is connected to), the dedicated management wavelength must be out of band with respect to all service wavelengths that are reserved for the optical network. In embodiments in which each optical transmitter according to the invention (i.e. each transmitter that uses the specific authentication mode) is coupled to an optical network element which comprises a TAPC or is realized as a TAPC, wherein the TAPC communicates with the respective at least one optical transceiver, in the authentication mode, in the upstream and downstream direction using the dedicated management wavelength and wherein the TAPC communicates with the transceiver controller, in the authentication mode, in the upstream and downstream direction using a (different) management communication functionality of the optical network management system, the dedicated management wavelength can be identical to a service wavelength that is used within the optical network by other optical transceivers or transponders (e.g. in an existing optical network that uses transponders and the optical transceivers according to the invention that are comprised by a respective router). However, in this case the optical transceiver according to the invention cannot use the dedicated management wavelength as a service wavelength. In other words, in such embodiments the dedicated management wavelength must be out of band with respect to service wavelength that are reserved for the respective optical transceiver.

An optical transceiver according to the invention that is configured to operate in a communication network comprising an Internet protocol (IP) network and an optical network comprises the features and functionalities as explained above. Especially, such an intelligent optical transceiver is configured to be switchable between an authentication mode and the in-service mode. It is further configured to communicate with the optical network management system using a transceiver management channel. The optical transceiver is configured, in the authentication mode, to create and output an upstream optical management signal and to receive a downstream optical management signal at a predetermined dedicated management wavelength out of band with respect to service wavelengths reserved for all optical service channels in the optical network.

The optical transceiver may further be configured to establish the transceiver management channel, in the in-service mode, as an embedded management channel. Of course, the optical transceiver may be configured to create and transmit as well as to receive management information that is included in a bidirectional embedded management channel.

In the following, the invention will be described in more detail with reference to the drawings. In the drawings,
- Fig. 1: shows a schematic block diagram of a communication network comprising an optical network and an IP network as known in the prior art;

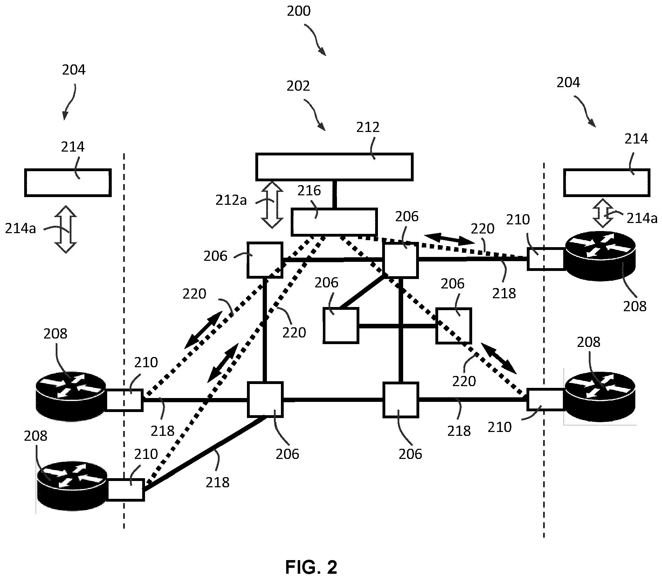

- Fig. 2: shows a schematic block diagram of a communication network comprising an optical network and an IP network according to a first embodiment of the invention using a point-to-multipoint communication scheme for the transceiver management channels between the transceiver controller and the optical transceivers;

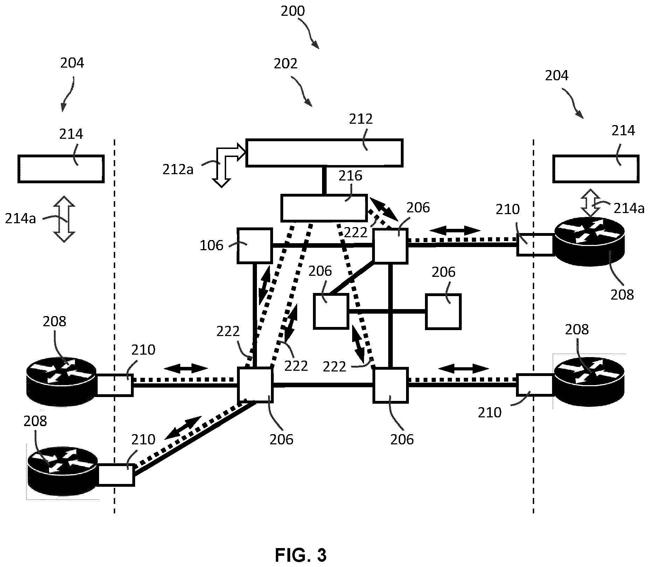

- Fig. 3: shows a schematic block diagram of a communication network comprising an optical network and an IP network according to a second embodiment of the invention using a point-to-point communication scheme for the transceiver management channels between the transceiver controller and the transceiver access point controllers connecting the optical transceivers to the optical network;

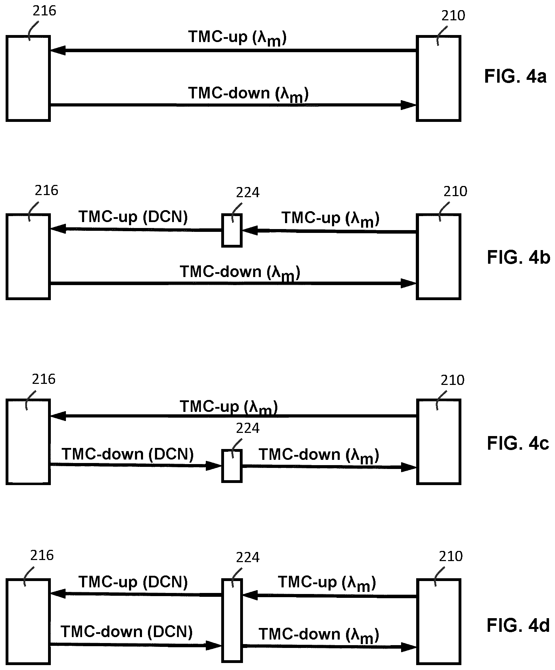

- Fig. 4: shows a schematic diagram visualizing various embodiments of the transceiver management channel in the authentication mode, wherein the dedicated management wavelength is used for the whole communication path between the optical transceiver and the transceiver controller (Fig. 4a) and wherein the use of the dedicated management wavelength is terminated in a transceiver access point controller in the upstream direction (Fig. 4b) or in the downstream direction (Fig. 4c) only or in both directions (Fig. 4d); and

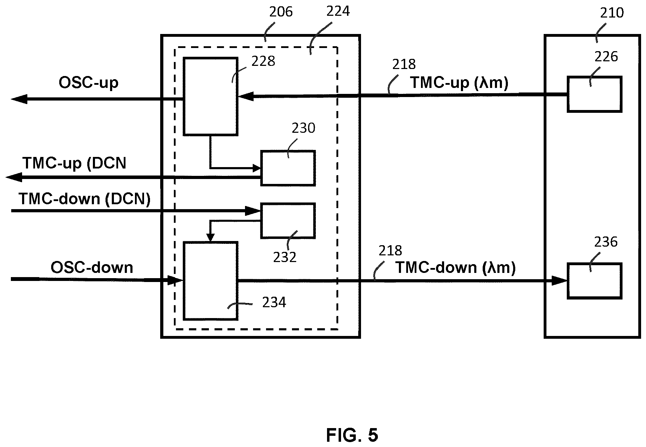

- Fig. 5: shows a schematic block diagram of a transceiver access point controller connecting a single optical transceiver.

FIG. 2 schematically shows the architecture of an IP over optical communication network 200 similar to the communication network 100 explained above. The communication network 200 comprises an optical network 202 and an IP network 204. The optical network 202 comprises a plurality of network nodes or optical network elements 206 connected to each other as apparent from the Figure. The optical network elements 206 may be connected to each other in any appropriate manner. For example, a fully meshed architecture may be chosen for the optical network 202. The optical network elements 206 may, for example, be realized as reconfigurable optical add-drop multiplexers (ROADMs). The IP network 204 is represented by four IP network elements 208, namely, routers, only, which connect the IP network 204 to the optical network 202 by using optical transceivers 210 comprised by the routers. Each optical transceiver 210 may be integrated within the respective router 208 or realized as a plug-in module or even realized as separate (stand-alone) unit that is connected to the router 208. Each router 208 comprises at least one optical transceiver 210. Of course, the IP network 204 may comprise arbitrary further IP network elements. As already mentioned above, the optical transceivers 210 usually (but not necessarily) are tunable optical transceivers comprising a tunable laser in order to realize a colorless optical network 202. Of course, the optical network 202 may use a WDM or DWDM scheme, so the network 200 may be referred to as an IPoWDM network.

The IP network 204 comprises an IP network management system 214 configured to manage all functionalities of the IP network 204 including the routers 208 apart from optical transceivers 210 comprised by the routers 208 (this management functionality is indicated by arrows 214a). At least the IP network management system 214 does not manage the optical transceivers with respect to parameters and functionalities that are of importance for the management of the optical network 202. Likewise, the optical network 202 comprises an optical network management system 212 which is configured to manage the optical network as described above (including all FCAPS functionality; this management functionality is indicated by arrow 212a).

As explained above, it is known in the art to (at least partly) configure the optical transceivers 210 that are comprised by the routers 108 - and thus located within the IP domain - in such a way that configuration information stemming from the optical network management system 212 is supplied to the optical transceivers, for example by a communication link between the optical network management system 212 and the IP network management system 214 or by using a separate communication link, for example an Ethernet link, between the optical transceiver and the respective optical network element that is connected to the optical transceiver.

According to the invention, no direct communication link between the optical network management system 212 and the IP network management system 214 or the respective router 208 is established in order to configure an optical transceiver 210.

It shall be mentioned at this point that "configuring" an optical transceiver 210 throughout this description means to configure and communicate with an optical transceiver 210 with respect to all parameters, information and functionalities that are important in order to operate the optical network 202. For example, the optical network management system 212 determines the center wavelength, i.e. the optical channel, that shall be used by a given optical transceiver, the modulation format that shall be used by the optical transceiver to communicate with the optical network 202 and the mode in which the optical transceiver shall operate (especially the authentication mode and the in-service mode, explained in detail below). Further, also information, for example with respect to the in-service communication link like information on the bit error rate (BER), can be provided by an optical transceiver 210 and transmitted to the optical network management system 212.

According to the invention, each optical transceiver 210 is realized as an intelligent optical transceiver which is configured to directly communicate with the optical network management system 212.

As apparent from FIG. 2, the optical network management system 212 comprises a transceiver controller 216. The transceiver controller 216 may be realized as a separate unit or integrated within the hardware and/or software of the optical network management system 212.

A transceiver management channel is used in order to establish a management communication link between an optical transceiver 210 and the transceiver controller 216 or the optical network management system 212. This management communication link (also referred to as transceiver management channel) is established by using an optical path 218 that connects the optical transceiver 210 and the optical network element 206.

Each optical transceiver 210 is configured to be capable of operating in an in-service mode and an authentication mode, wherein the optical transceiver 210 is automatically switched into the authentication mode after power on or in case the optical transceiver 210 detects no valid configuration. Further, the optical transceivers 210 are configured to switch from the in-service mode to the authentication mode in case a reconfiguration command is received from the optical network management system 212.

In its in-service mode, the optical transceiver 210 and the optical network management system 212 communicate by using an embedded communication channel (ECC), at least for the communication link between the optical transceiver 210 and the respective optical network element 206. That means, the transceiver management channel is realized within this link by means of an ECC. As known in the art, the ECC can, for example, be realized by amplitude-modulating the respective upstream or downstream (wanted) optical signal using a low-frequency band that does not overlap with the frequency spectrum including the information of the respective in-service channel.

The optical network management system 212 is further configured to establish a management communication functionality in order to manage the whole optical network. This includes a so-called data communication network (DCN) that is used to bidirectionally transmit management information between the optical network elements 206 and the optical network management system 212. Such a DCN may be realized using ECCs or any other appropriate communication links.

In the in-service mode of the optical transceiver 210, the existing DCN may be used for the transceiver management channel.

In its authentication mode, the optical transceiver 210 communicates with the optical network element 206 it is connected to by using a dedicated management (center) wavelength λₘ, i.e. a dedicated wavelength channel. That is, the management communication link between an optical transceiver 210 and the transceiver controller 216 is realized, at least within the link that is realized by the optical path 218 between the optical transceiver 210 and the optical network element 206, by using this dedicated management wavelength λₘ. The management wavelength λₘ is chosen in such a way that it is out of band with respect to all service wavelengths used for the optical service channels within the optical network 202. Different management wavelengths λₘ may be used to realize the management channel between an optical transceiver 210 and an optical network element 206 in the upstream direction (i.e., the direction from the optical transceiver 210 to the optical network element 206 or the transceiver controller 216) and the downstream direction (i.e., the direction from the transceiver controller 216 or the optical network element 206 to the optical transceiver 210).

As visualized in FIG. 2, a (bidirectional) point-to-multipoint communication may be realized between the transceiver controller 216 and the optical transceivers 210, at least in the authentication mode. This means that the transceiver controller 216 is connected to the optical transceivers 210 by respective different communication links 220. Each of these communication links 220 uses a respective optical path 218 between the respective optical transceiver 210 and the dedicated optical network element 206. In such an embodiment, the optical network 202 is further configured to provide a respective optical path that permanently exists between each optical network element 206 and the transceiver controller 216. For this purpose, the transceiver controller 216 may be provided within the optical network 202 at an appropriate location. For reasons of simplicity, FIG. 2 only schematically visualizes the respective communication links 220 irrespective of the optical paths (represented by the thick lines between the optical network elements 206 and the optical transceivers 210) that are used to realize the communication links.

FIG. 3 shows essentially the same communication network 200 as FIG. 2. However, the management channel in the authentication mode of the transceivers 210 is realized by using a point-to-point communication link 222, at least between each optical network element 206 connected to an optical transceiver 210 and the transceiver controller 216. Such a point-to-point communication link 222 may be realized by using the existing DCN of the optical network 202. The communication link between each optical transceiver 210 and the respective optical network element 206 is still realized, in the authentication mode of an optical transceiver 210, by using the dedicated management wavelength λₘ.

Thus, the embodiment according to FIG. 3 requires an additional functionality in the optical network elements 206 that connect one or more optical transceivers 210 to the optical network 202, namely, means that receive a respective upstream optical management signal created by an optical transceiver 210 and extract the information included therein. The information extracted can then be transmitted to the optical network management system 212 or the transceiver controller 216, respectively, using the optical network DCN.

Further, the respective optical network elements 206 require the additional functionality of extracting information destined for a respective optical transceiver 210 from the respective DCN communication link with the transceiver controller 216 or the optical network management system 212 and additional means configured to create a downstream optical management signal that includes this information and that is transmitted to the respective optical transceiver 210.

If more than one optical transceiver 210 is connected to an optical network element 206, the optical network elements 206 must either include two separate means for creating and transmitting a respective upstream optical management signal for each optical transceiver 210, or a TDM scheme must be realized for the communication of the optical transmitters 210 and the optical network element 206 including a collision detection.

It is, of course, also possible to use a frequency modulation scheme, wherein an optical transceiver or the transceiver controller modulates the respective information onto the management wavelength using a predefined sub-carrier frequency. The demodulation can be carried out using an appropriate electrical filter. In order to avoid signal interference, switching between a predefined set of sub-carrier frequencies may be used.

As will be explained below in more detail, also combinations of a point-to-point and a point-to-multipoint communication in the upstream and downstream direction may be used to realize the transceiver management channel in the authentication mode.

FIG. 4a shows a schematic representation of the transceiver management channel (TMC) between an optical transceiver 210 and the transceiver controller 216, wherein the transceiver management channel is realized in the upstream and downstream direction, for the whole communication path, by using the dedicated management wavelength λₘ. As explained above, a permanent optical path may exist between each of the optical transceivers 210 and the transceiver controller 216. The transceiver controller 216 may comprise a single transceiver capable of receiving and transmitting upstream and downstream optical management signals. That is, the (permanently existing) optical paths are combined to a single optical path which is connected to the optical transceiver of the transceiver controller 216.

The same optical path may be used for the transceiver management channel in the upstream direction (TMC-up) and the transceiver management channel in the downstream direction (TMC-down).

In this embodiment, no hardware modification of an existing optical network element 206 is required. However, the optical network must be capable of providing a permanently existing optical path between each optical network element 206 capable of connecting one or more optical transceivers 210. In order to avoid interference of more than one upstream optical management signals created by different optical transceivers 210, a TDM scheme must be realized for the communication between the transceiver controller 216 (or the optical network management system 212) and the optical transceivers 210. In order to avoid permanent (accidental) collision between different upstream optical management signals, the optical transceivers 210 may be configured to retransmit an upstream optical management signal at non-constant, for example randomized (within a minimum and maximum possible value), time intervals. It is also possible that each optical transceiver 210 is configured to use a unique time interval for retransmitting the upstream optical management signal. Such a unique time interval may be determined by the optical transceiver 210 (or stored therein as a fixed value) by using a unique parameter of the optical transceiver, for example the serial number or the MAC address. The transceiver controller 216 must be capable of detecting such interference of a plurality of upstream optical management signals. The optical transceivers may be configured to retransmit an upstream optical management signal in case no response is received within a given (maximum) time interval.

The transceiver controller 216 may, in such embodiments, be configured to address a selected optical transceiver 210 by including an address information within the downstream optical management signal that is broadcasted to all optical transceivers 210.

FIG. 4b shows a schematic representation of the transceiver management channel, wherein the transceiver management channel in the downstream direction (TMC-down) is realized, for the whole communication path, by using the dedicated management wavelength λₘ. In the upstream direction, the transceiver management channel (TMC-up) is realized by using the dedicated management wavelength λₘ for the link between the optical transceiver 210 and the optical network element 206. In this embodiment, a transceiver access point controller (TAPC) 224 is provided, which realizes the functionality of receiving the upstream optical management signal and extracting the information included therein and which includes means for providing this information to the DCN of the optical network 202. The DCN is then used to transmit the information to the transceiver controller 216 or the optical network management system 212, respectively. The TAPC 224 can be integrated within the optical network element 206 or be realized as a separate unit that is connected to the optical network element 206.

Of course, the DCN information may not be received by the transceiver controller 216, but by the optical network management system 212 (i.e the part of the optical network management system without the transceiver controller).

In embodiments comprising more than one optical transceiver 210 connected to an optical network element 206, a TDM scheme as explained above may be used for the communication between the optical network element 206 and the respective optical transceivers 210. Of course, the respective means included in the network elements 206 must be capable of detecting signal collisions.

FIG. 4c shows a schematic representation of the transceiver management channel, wherein the transceiver management channel in the upstream direction (TMC-up) is realized by using the dedicated management wavelength λₘ for the whole communication link and wherein a TAPC 224 is used to establish a communication link in the downstream direction (TMC-down) between the optical network element 206 and the optical transceiver 210 using the dedicated management wavelength λₘ. As explained above, the TAPC must be configured to receive management information from the transceiver controller 216 or the optical network management system 212 and to include this information in the downstream optical management signal at the dedicated management wavelength λₘ. If, in such an embodiment, more than one optical transceiver 210 is connected to the optical network element 206, the downstream optical management signal may be provided to each of the optical transceivers 210 using an optical splitter within the downstream optical path.

FIG. 4d shows a schematic representation of the transceiver management channel, wherein also the transceiver management channel in the upstream direction (TMC-up) is realized by using the dedicated management wavelength λₘ for the communication link between the optical transceiver 210 and the optical network element 206. In this embodiment, the TAPC 224 combines the functionalities of the TAPCs that are used in the embodiments according to FIG. 4b and FIG. 4c. That is, the transceiver management channel between the TAPC 224 and the transceiver controller 216 or the optical network management system 212 is realized by using the existing DCN of the optical network 202.

FIG. 5 shows a simplified schematic block diagram of a TAPC 224 and its functionalities comprised by an optical network element 206 that is connected to an optical transceiver 210. The TAPC 224 is configured to realize all functionalities as explained above in connection with an embodiment according to FIG. 4d. The TAPCs 224 according to the embodiments shown in FIG. 4b and FIG. 4c only comprise the respective means and functionalities for either the upstream or downstream direction. For the respective other direction, the respective upstream optical management signal received from the optical transceiver 210 and the respective downstream optical management signal received from the transceiver controller is passed through the TAPC 224.

As apparent from FIG. 5, the optical transceiver 210 comprises a (preferably tunable) optical transmitter 226, e.g. a tunable laser, which is connected, via an optical path 218, to an optical filter 228 included in the TAPC 224. The optical filter 228 is configured to output the upstream optical management signal at the dedicated management wavelength λₘ , which is created in the authentication mode by the optical transmitter 226, at an output port of the optical filter 228 which is connected to an optical receiver 230, whereas all possible service wavelengths used for realizing upstream optical service channels (OSC-up) (which can be used by the optical transmitter 226 in the in-service mode) are passed through the TAPC 224 and, as the case may be, forwarded to the further means and functionalities of the optical network element 206. The optical receiver 230 is configured to extract the information included in the upstream optical management signal and to feed this information to further means included within the optical network elements 206 (not shown) which are configured to transmit this information to the transceiver controller 216 or the optical network management system 212 using the DCN. For simplicity, FIG. 5 visualizes the upstream transceiver management channel TMC-up via the DCN by an arrow extending from the optical receiver 230.

Likewise, the optical network element 206 in FIG. 5 is configured to receive and extract information from the transceiver management channel in the downstream direction (TMC-down) that is realized by the DCN and to feed this information to an optical transmitter 232 included in the TAPC 224. The optical transmitter 232 creates the corresponding downstream optical management signal (transmitted within the downstream transceiver management channel), which is fed to an optical multiplexer 234, which is configured to combine the optical path for the respective downstream optical management signal and the optical path for the downstream optical service channels (OSC-down) that are received by the optical network element 206. An output port of the optical multiplexer 234 is connected to an optical receiver 236 comprised by the optical transceiver 210 by the optical path 218.

It shall be mentioned at this point, that any optical path within the optical network 202 may either be realized by separate optical fibers (or generally speaking, by separate optical paths) for each transmission direction or by a single optical fiber (or a single optical path) for both transmission directions.

It is also possible to use an optical splitter instead of the optical multiplexer 234, which makes it possible to couple a downstream optical management signal, in the in-service mode, into the optical path 218. Especially, a downstream optical management signal can be created by the optical transmitter 232 having a wavelength that is equal to the wavelength actually used for the downstream optical service channel. This means, that the downstream optical management signal (which, for example, comprises a low frequency modulation portion) is superimposed to the optical signal in the downstream optical service channel. In this way, it is possible to realize the downstream transceiver management channel, in the in-service mode, between the optical network element 206 and a respective optical transceiver 210 as an embedded communication channel. Even if a wavelength selective receiver, for example a coherent receiver 236, is used in the optical transceiver 210, both the signal components in the downstream optical service channel and in the downstream transceiver management channel can be received and processed by the optical transceiver 210. As already mentioned above, a, command included in the downstream optical management signal can force the optical transceiver 210 from the in-service mode to the authentication mode. However, such an embodiment requires a tunable optical transmitter 232 which is capable of creating a downstream optical management signal at the dedicated wavelength λₘ in the authentication mode as well as a downstream optical management signal at the respective service wavelength in the in-service mode. Of course, the information concerning the in-service wavelength that is used in the downstream optical service channel can be received by the optical network element 206 via the DCN.

Of course, if the optical transceiver 210 comprises a broad-band receiver, a signal received that comprises a signal portion in the downstream optical service channel at a respective service wavelength and a signal portion in the downstream transceiver management channel that the dedicated management wavelength λₘ, an optical multiplexer 234 can advantageously be used in the TAPC 224 as a multiplexer introduces a lower insertion loss into the downstream optical service channel.

Finally, it shall be explained how such intelligent optical transceiver 210 is integrated into the optical network in order to realize the desired communication link at a predetermined service wavelength. If such an intelligent optical transceiver 210 is powered up, for example by plugging a corresponding pluggable optical transceiver into a router 208 of the IP network, the optical transceiver 210 is automatically switched into the authentication mode. Next, the optical transceiver 210 creates an upstream optical management signal that comprises identification information, for example a serial number, and, as the case may be, further information on specific properties of the optical transceiver 210. As explained above, this information is transmitted to the optical network management system 212 or the transceiver controller 216 using the transceiver management channel, which is, at any rate, realized between the optical transceiver 210 and the respective optical network element 206 by using the dedicated management wavelength. As a reaction, the transceiver controller 216 or the optical network management system 212 transmit a configuration information to the optical transceiver 210, which may include information concerning the service wavelength and the modulation format to be used for realizing a desired communication link using an optical service channel. Any information that is required by the optical transceiver 210 in order to function in an appropriate manner, when switched to the in-service mode, may be transmitted through the downstream transceiver management channel. Once the optical transceiver 210 detects that all information required to establish the optical service channel has been received from the optical network management system 212 or the transceiver controller 216, it switches into the in-service mode. Of course, the optical transceiver 210 may be configured in such a way that the in-service mode is activated only upon receipt of a respective command received from the optical network management system 212.

The transceiver management channel in the in-service is used to exchange any information between the optical transceiver 210 and the optical network management system 212, especially information required by the optical network management system 212 to appropriately manage the optical network 202 including the optical transceivers 210. Especially, information concerning the bit error rate can be collected within the optical transceivers 210 and transmitted to the optical network management system.

### List of reference signs

- 100: communication network
- 102: optical network
- 104: IP network
- 106: optical network elements
- 108: IP network element
- 110: optical transceiver
- 112: optical network management system
- 112a: arrow indicating optical management communication functionality
- 114: IP network management system
- 114a: arrow indicating IP management communication functionality

- 200: communication network
- 202: optical network
- 204: IP network
- 206: optical network elements
- 208: IP network element
- 210: optical transceiver
- 212: optical network management system
- 212a: arrow indicating optical management communication functionality
- 214: IP network management system
- 214a: arrow indicating IP management communication functionality
- 216: transceiver controller
- 218: optical path
- 220: point-to-multipoint communication link
- 222: point-to-point communication link
- 224: transceiver access point controller (TAPC)
- 226: optical transmitter
- 228: optical filter
- 230: optical receiver
- 232: optical transmitter
- 234: optical multiplexer
- 236: optical receiver

- λₘ: management wavelength

## Claims

1. A communication network comprising an Internet protocol (IP) network and an optical network,
(a) wherein the IP network defines an IP domain and comprises a plurality of IP network elements,
(b) wherein the optical network defines an optical domain and comprises a plurality of optical network elements and an optical network management system, which takes over control functions in the optical domain, and
(c) wherein at least one IP network element comprises at least one optical transceiver which is connected, via an optical path, to a dedicated optical network element and which, in an in-service mode, is configured
(i) to convert downstream optical traffic included in a bidirectional optical service channel, which is received from the dedicated optical network element and destined for the IP domain, into IP traffic that is further processed by the at least one IP network element and
(ii) to convert IP traffic, which is received from the at least one IP network element and destined for the optical domain, into upstream optical traffic included in the bidirectional optical service channel that is fed to and further processed by the dedicated optical network element,
**characterized in**
(d) **that** the at least one optical transceiver is configured to be switchable between an authentication mode and the in-service mode,
(e) **that** the at least one optical transceiver is configured to communicate with the optical network management system using a transceiver management channel,
(f) wherein the at least one optical transceiver and the optical network are configured to establish the transceiver management channel, in the authentication mode, at least between the at least one optical transceiver and the dedicated optical network by using a dedicated out of band management wavelength.

2. The communication network according to claim 1, **characterized in that** the at least one optical transceiver and the optical network are configured to establish the transceiver management channel, in the in-service mode, at least between the at least one optical transceiver and the dedicated optical network element by using an embedded management channel.

3. The communication network according to one of claims 1 to 2, **characterized in that** the at least one optical transceiver is configured
(a) to automatically switch into the authentication mode after power on and/or
(b) to switch from the in-service mode to the authentication mode after having received a reconfiguration command from the optical network management system.

4. The communication network according to one of the preceding claims, **characterized in that** the optical management system comprises, integrally or as a separate device, a transceiver controller which is configured to bidirectionally communicate with the at least one optical transceiver, and optionally with the optical network management system, using the transceiver management channel.

5. The communication network according to claim 4, **characterized in that** the optical network is configured in such a way that the transceiver management channel is realized in the upstream direction to the transceiver controller, in the authentication mode, also between the dedicated optical network element and the transceiver controller, by using the dedicated management wavelength, wherein the optical network is configured in such a way that all upstream optical management signals at the dedicated management wavelength that are created by the optical transceivers operating in the authentication mode and received at respective optical network elements are received by the transceiver controller.

6. The communication network according to claim 5, **characterized in that** the at least one optical transceiver is configured to use a Time Division Multiple Access (TDMA) scheme for the communication in the upstream direction.

7. The communication network according to claim 6, **characterized in that** the at least one optical transceiver is configured to use an asymmetric TDMA scheme in order to avoid continuous collision with other transceiver management channels used by other optical transceivers, wherein a transmission in the upstream direction is repeated either in non-constant, especially randomized intervals or in constant intervals that are determined using a unique characteristic feature of the at least one optical transceiver, for example a serial number thereof.

8. The communication network according to one of claims 4 to 7, **characterized in that** the optical network is configured in such a way that the transceiver management channel is realized in the downstream direction to the at least one optical transceiver, in the authentication mode, also between the transceiver controller and the dedicated optical network element, by using the dedicated management wavelength.

9. The communication network according to claim 8 **characterized in that** the optical network and the transceiver controller are configured in such a way that a downstream optical management signal at the dedicated management wavelength is broadcasted to all optical network elements that are capable of being connected to at least one optical transceiver.

10. The communication network according to one of claims 5 to 9, **characterized in that** the optical network is configured in such a way that a permanent optical path exists between each optical network element, which is capable of being connected to at least one optical transceiver, and the transceiver controller.

11. The communication network according to one of claims 4 to 7, **characterized in**
(a) **that** the transceiver controller comprises at least one transceiver access-point controller located at or integrated within the at least one optical network element,
(b) wherein the optical network is configured in such a way that, in the authentication mode,
(i) the transceiver management channel in the downstream direction to the at least one optical transceiver between the transceiver controller and the at least one transceiver access-point controller is realized by using a management communication functionality of the optical network management system,
(ii) wherein the least one transceiver access-point controller is configured to realize the transceiver management channel in the downstream direction to the at least one optical transceiver by creating a respective downstream optical management signal at the dedicated management wavelength.

12. The communication network according to one of claims 8 to 10, **characterized in**
(a) **that** the transceiver controller comprises at least one transceiver access-point controller located at or integrated within the at least one optical network element,
(b) wherein the optical network is configured in such a way that, in the authentication mode,
(i) the transceiver management channel in the upstream direction to the transceiver controller between the at least one transceiver access-point controller and the transceiver controller is realized by using a management communication functionality of the optical network management system,
(ii) wherein the least one transceiver access-point controller is configured to receive a respective upstream optical management signal at the dedicated management wavelength from the at least one optical transceiver.

13. The communication network according to claim 4, **characterized in**
(a) **that** the transceiver controller comprises at least one transceiver access-point controller located at or integrated within the at least one optical network element,
(b) wherein the optical network is configured in such a way that, in the authentication mode,
(i) the transceiver management channel in the downstream direction to the at least one optical transceiver between the transceiver controller and the at least one transceiver access-point controller is realized by using a management communication functionality of the optical network management system,
(ii) wherein the least one transceiver access-point controller is configured to realize the transceiver management channel in the downstream direction to the at least one optical transceiver by creating a respective downstream optical management signal at the dedicated management wavelength, and
(c) wherein the optical network is configured in such a way that, in the authentication mode,
(i) the transceiver management channel in the upstream direction to the transceiver controller between the at least one transceiver access-point controller and the transceiver controller is realized by using a management communication functionality of the optical network management system,
(ii) wherein the least one transceiver access-point controller is configured to receive a respective upstream optical management signal at the dedicated management wavelength from the at least one optical transceiver.

14. An optical transceiver configured to operate in a communication network comprising an Internet protocol (IP) network and an optical network,
(a) wherein the IP network defines an IP domain and comprises a plurality of IP network elements, and
(b) wherein the optical network defines an optical domain and comprises a plurality of optical network elements and an optical network management system, which takes over control functions of the optical domain,
(c) wherein the optical transceiver is configured to be connected to an IP network element and, via an optical path, to a dedicated optical network element and wherein the optical transceiver, in an in-service mode, is configured
(i) to convert downstream optical traffic included in a bidirectional optical service channel, which is received from the dedicated optical network element and destined for the IP domain, into IP traffic that is further processed by the at least one IP network element and
(ii) to convert IP traffic, which is received from the at least one IP network element and destined for the optical domain, into upstream optical traffic included in the bidirectional optical service channel that is fed to and further processed by the dedicated optical network element,
**characterized in**
(d) **that** the optical transceiver is configured to be switchable between an authentication mode and the in-service mode,
(e) **that** the at least one optical transceiver is configured to communicate with the optical network management system using a transceiver management channel,
(f) wherein the optical transceiver is configured, in the authentication mode, to create and output an upstream optical management signal and to receive a downstream optical management signal at a predetermined dedicated management wavelength out of band with respect to service wavelengths reserved for all optical service channels in the optical network.

15. The optical transceiver according to claim 14, **characterized in that** it is configured to establish the transceiver management channel, in the in-service mode, as an embedded management channel.

16. The optical transceiver according to claim 14 or 15, **characterized in that** the optical transceiver is configured
(a) to automatically switch into the authentication mode after power and/or
(b) to switch from the in-service mode to the authentication mode after having received a reconfiguration command from the optical network management system.
